# EUROPEAN PATENT SPECIFICATION

(11) **EP 1 175 992 B1**
(45) Date of publication and mention of the grant of the patent: **07.12.2005**
(21) Application number: 01305910.0
(22) Date of filing: 09.07.2001
(51) Int. Cl.: B29D 30/60, B60C 19/08

(54) **Method of producing a tread for a pneumatic tire using an electrically conductive rubber material**
Verfahren zur Herstellung einer Reifenlauffläche aus einer elektrisch leitfähigen Gummimischung
Procédé pour la fabrication d'une bande de roulement pour un pneumatique utilisant une composition de caoutchouc éléctriquement conductrice

(30) Priority: 19.07.2000 JP 2000219191; 25.05.2001 JP 2001156360
(43) Date of publication of application: 30.01.2002
(73) Proprietor: Bridgestone Corporation, Tokyo (JP)
(72) Inventor: Koyama, Katsuto, c/o Bridgestone Corp. Tech. Ctr., Kodaira City, Tokyo (JP); Makino, Hisao, c/o Bridgestone Corp. Tech. Center, Kodaira City, Tokyo (JP)
(74) Representative: Whalley, Kevin

(56) References cited:
- EP-A- 0 718 127
- EP-A- 0 838 353
- EP-A- 0 872 360
- EP-A- 0 950 506
- DE-C- 820 543
- CRONIN R A: "STRIPWINDING: ANOTHER WAY TO PRODUCE COMPOSITES" ELASTOMERICS, COMMUNICATION CHANNELS, ATLANTA, GA, US, vol. 119, no. 8, August 1987 (1987-08), pages 24-27, XP001078964 ISSN: 0146-0706
- PATENT ABSTRACTS OF JAPAN vol. 1998, no. 12, 31 October 1998 (1998-10-31) -& JP 10 193475 A (YOKOHAMA RUBBER CO LTD:THE), 28 July 1998 (1998-07-28)
- PATENT ABSTRACTS OF JAPAN vol. 2000, no. 06, 22 September 2000 (2000-09-22) -& JP 2000 085316 A (BRIDGESTONE CORP), 28 March 2000 (2000-03-28)

## Description

This invention relates to a method of producing a tread for a tire capable of sufficiently discharging static electricity generated in a vehicle to a road surface while making a rolling resistance of the tire small.

Recently, it is increasingly demanded to reduce a fuel consumption of a vehicle from a viewpoint of not only economical efficiency by also environmental protection, and also it is strongly required to further reduce a rolling resistance in a tire for the vehicle accompanied with such a demand.

In order to satisfy such a requirement, it is favourable to decrease energy loss resulted from a deformation of a tread during the running of the tire under loading. For this end, there is a tendency to replace a greater part of carbon black having a high hysteresis loss unsuitable for reducing the rolling resistance, which is compounded in a tread rubber at a greater amount, with silica having a low hysteresis loss.

When a greater amount of silica is compounded by largely decreasing the amount of carbon black compounded in the tread rubber, however, a value of electric resistance in the tread rubber becomes higher and hence static electricity generated in the vehicle is hardly discharged to a road surface.

For ensuring the discharge property of the tread rubber, therefore, JP-A-2000-85316 propose that an electrically conductive layer made of a high electrically conductive rubber and radially extending from a base tread rubber to a ground contact face of a tread having, for example, a cap and base structure is formed by press-fitting a high electrically conductive rubber into a cap tread rubber having a low electrical conductivity through a multilayer extruder, or by cutting a cap tread rubber shaped through a spinneret of an extruder and flowing a high electrically conductive agent into a space between cut faces.
EP-A1-0838353 discloses a pneumatic tire for a vehicle, the tread strip of which comprises three regions having varying electrical resistances.
EP-A1-0718127 and EP-A2-0872360 also each describe a vehicle tire having a tread strip.

Also, it is attempted to form an electrically conductive thin layer on a tread portion by applying a high electrically conductive agent to the tread portion over a whole surface thereof.

In the method of press-fitting the high conductive rubber into the low conductive car tread rubber through the multilayer extruder, there are problems that when the fitting position of the high electrically conductive rubber is changed in accordance with the form, size and the like of the cap tread rubber, it is required to change an internal shape of an extruding head, and it is difficult to design an extruding head for rendering the electrically conductive layer into adequate form and size.

In the method of flowing the high electrically conductive agent into the space between physically cut faces of an uncured cap tread rubber shaped through the spinneret, it is difficult to sufficiently prevent the adhering between the cut faces of the cap tread rubber prior to the flowing of the high electrically conductive agent. On the other hand, when the flowing of the high electrically conductive agent is carried out in the cap tread rubber after the curing, a fear of generating a breakage of the tread from the cut faces during the running of the tire under loading becomes higher.

When the electrically conductive thin layer is formed over the whole surface of the tread portion, since a ground contact face of the tread is worn during the running of the tire, such an electrically conductive thin layer is prematurely lost from the ground contact face of the tread.

It is, therefore, an object of the invention to solve the aforementioned problems of the conventional techniques and to provide a method of producing a tread for a tire which can simply and rapidly form an electrically conductive layer having desired form and size at a required position while making unnecessary a special design of an extruding head and a change of an internal shape in the extruding head for the formation of the required electrically conductive layer and sufficiently removing a fear of generating breakage of a tread at the position of the electrically conductive layer formed.

According to the invention, there is provided a method of producing a tread for a tire provided with an electrically conductive layer arranged in at least one of a widthwise middle portion and side faces of a tread rubber made from a low electrically conductive rubber extending from a high electrically conductive rubber layer located at an inner peripheral side of the tread rubber to a ground contact face of the tread, which method comprises the steps of:
winding and laminating an uncured high electrically conductive rubber ribbon for the formation of the electrically conductive layer on a circumference of a tire material containing a high electrically conductive rubber layer in a thickness direction as at least an outermost layer at a given height in a radial direction under the rotation of the tire material by contacting the windings with each other over substantially the full width of the rubber ribbon,
and winding an uncured tread rubber on the circumference of the tire material before or after the winding of the rubber ribbon.

According to the invention, when a core having an outer circumferential shape corresponding to an inner circumferential shape of a product tire is used as a rotating support, and when a tire building drum is used as a rotating support and rendered into a shaping posture expandedly deforming a carcass band, the tire material is comprised of an innerliner, a carcass and a belt successively laminated on an outer circumferential face of the rotating support. Also, when a belt-tread drum is used as a rotating support, the tire material is a belt stuck and shaped on an outer circumferential face of the drum. Furthermore, when a base tire for forming a retread tire is used as a rotating support, the tire material is comprised of the base tire itself and a cushion rubber layer (hereinafter referred to as a tread under-cushion rubber layer) arranged under a tread on an outer circumferential side of a belt of the base tire.

The tread under-cushion rubber layer may be added to the tire materials other than the base tire used as the rotating support. Also, when the tread has a cap-base structure, all of the above tire materials may selectively be provided with a base tread rubber layer.

In any case, at least one of the base tread rubber layer, tread under-cushion rubber layer, coating rubber layer for belt cord and coating rubber layer for cords in a belt protection member is a high electrically conductive rubber layer compounded with a greater amount of carbon black.

Moreover, the high electrically conductive rubber preferably has a volume resistivity at 25°C of not more than 10⁶ Ω· cm after the vulcanization The rubber ribbon is preferably a continuous body shaped by an extrusion die, a roller die or the like and having a width of about 2-80 mm, preferably 5-30 mm and a thickness of about 0.2-7.0 mm.

According to the method of the invention, the electrically conductive layer having any form and size can simply, easily and rapidly be formed in an arbitrary position only by winding the high electrically conductive uncured rubber ribbon on the circumference of the tire material without using a special extrusion head or the like.

Although the uncured tread rubber made from the low electrically conductive rubber occupies the total thickness of the tread or is a cap tread rubber in the tread having a cap-base structure, it is wound on the circumference of the tire material before or after the winding of the high electrically conductive uncured rubber ribbon, whereby a tread can be shaped as is expected.

In the winding of the uncured tread rubber, a part of the uncured tread rubber may be wound on the circumference of the tire material before the winding of the high electrically conductive rubber ribbon and the remainder thereof may be wound after the winding of the rubber ribbon. In this way, the winding position of the rubber ribbon can accurately be specified and guided by a part of the previously arranged uncured tread rubber and hence an accidental change of the winding shape of the rubber ribbon can effectively be prevented.

That is, by dividing the uncured tread rubber into two parts the rubber ribbon can smoothly, accurately and tightly be arranged in a given position between the two parts of the uncured tread rubber as compared with a case that the whole of the uncured tread rubber is wound before the winding of the rubber ribbon.

In the invention, the uncured tread rubber can be constructed by winding a low electrically conductive uncured rubber ribbon on the circumference of the tire material as a whole. Thus, the tread rubber can easily be formed in any form and size and hence the degree of freedom in the design of the electrically conductive layer such as position and form can be more increased.

On the other hand, when the whole of the uncured tread rubber is an integral extrusion shaped body of a low electrically conductive uncured rubber and the electrically conductive layer is existent in a widthwise middle portion of the tread rubber, the shaping efficiency of the tread can be increased by winding such integral extrusion shaped body on the circumference of the tire material so as to be arranged at both sides of the electrically conductive layer.

Further, when a part of the uncured tread rubber is a low electrically conductive uncured rubber ribbon wound on the circumference of the tire material and the remainder is an integral extrusion shaped body of the low electrically conductive uncured rubber, the aforementioned merits can simultaneously be established.

On the other hand, when a high electrically conductive uncured rubber ribbon for the formation of the electrically conductive layer is wound at a side face of the uncured tread rubber on an outermost layer of the tire material, e.g. a base tread rubber layer, a tread under-cushion rubber layer or a belt cord coating rubber layer made of a high electrically conductive rubber within a given height in the radial direction, the electrically conductive layer can be more simply and rapidly formed with a higher arranging accuracy as compared with a case that the electrically conductive layer is formed in the widthwise middle portion of the tread rubber.

Moreover, when the outermost layer of the tire material is a base tread rubber layer made of a high electrically conductive rubber and the uncured tread rubber provided with the electrically conductive layer is a cap tread rubber layer, if a layer located at an inner circumferential side of the bead tread rubber layer is a tread under-cushion rubber layer or a belt cord coating rubber layer made of a high electrically conductive rubber, the discharge of static electricity generated in the vehicle toward the road surface can be carried out more smoothly and rapidly.

In the tread having the above cap-base structure, even when the base tread rubber layer is made of high electrically conductive rubber, if a high electrically conductive uncured rubber ribbon is wound in a height ranging from the tread under-cushion rubber layer or the belt cord coating rubber layer to the outer surface of the cap tread rubber layer in the radial direction, the same effects as mentioned above can be developed.

Furthermore, in the tread having the cap-base structure, when the high electrically conductive uncured rubber ribbon is wound from a side face of the base tread rubber layer made of the high electrically conductive rubber to a side face of the cap tread rubber layer in a given height in the radial direction, the arranging accuracy of the rubber ribbon can be increased under a simple tread structure and also the electrically conductive layer can be formed more simply and rapidly.

Moreover, when at least one of the base tread rubber layer made of high electrically conductive rubber and the cap tread rubber layer made of the low electrically conductive rubber is formed by winding one or more kinds of uncured rubber ribbons on the tire material, the degree of freedom to the form, size and position can be increased likewise the aforementioned winding of the ribbon and also the winding can be carried out with a higher accuracy. Also, the properties in the same layer can be properly changed by varying the kind of the uncured rubber ribbon to be wound.

On the other hand, when at least one of the above layers formed by winding one or more kinds of integral extrusion shaped bodies of uncured rubbers, the tread shaping efficiency can be improved likewise the aforementioned cases and also rubber properties in the layers can be selected, if necessary.

The invention will be further described with reference to the accompanying drawings, wherein:
FIG. 1 is a schematic side view illustrating an outline for carrying out the method of the invention;
FIG. 2 is a diagrammatic section view in a widthwise direction of a tread illustrating the formation of an embodiment of the electrically conductive layer according to the invention;
FIGS. 3a and 3b are diagrammatic partial section views of various embodiments of the electrically conductive layer according to the invention, respectively;
FIG. 4 is a diagrammatic section view in a widthwise direction of a tread illustrating a forming embodiment of the electrically conductive layer according to the invention in a tread having a cap-base structure; and
FIG. 5 is a diagrammatic section view in a widthwise direction of a tread illustrating another forming embodiment of the electrically conductive layer according to the invention in a tread having a cap-base structure.

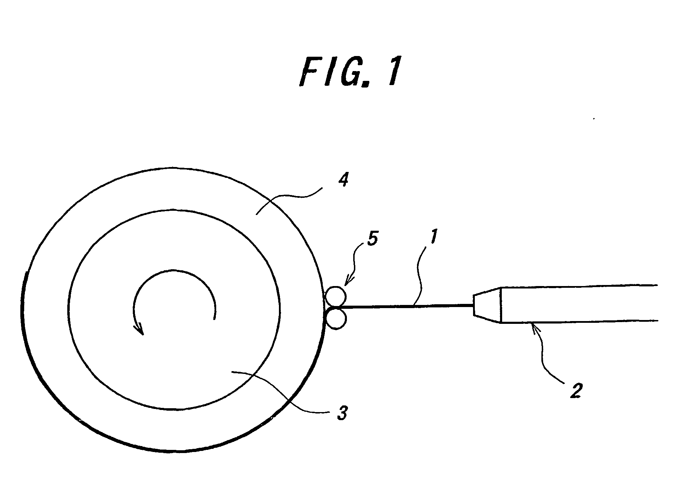

Referring to FIG. 1, an uncured rubber ribbon 1 is extruded and shaped through a die, a spinneret or the like of, for example, an extruder 2 as a continuous body of a rectangular shape having a width of about 1-80 mm and a thickness of 0.2-0.7 mm irrespective of high electrical conductivity or low electrical conductivity. The thus formed continuous uncured rubber ribbon 1 is directly wound on an outer circumference of a rotating support 3 or indirectly wound thereon through a tire material 4 previously piled on the support under the rotation of the support and stuck thereon under a pushing action of rollers 5.

As the rotating support 3, there may be used a high rigidity core having an outer circumferential shape corresponding to an inner circumferential shape of a product tire, a tire building drum, particularly a tire building drum of such a shaping posture that a central portion of a carcass band stuck on a circumference of the drum is largely expanded and deformed in a radial direction, a belt-tread drum, a base tire for forming a retreading tire and so on.

As the tire material 4, there are a shaped body of an innerliner, a carcass and a belt successively laminated on the core or the tire building drum, a belt stuck on the belt-tread drum, and a base tire provided on its circumference with a tread under-cushion rubber layer for a retreading tire. Also, the tread under-cushion rubber layer may be adhered to an outer circumferential side of the belt.

Moreover, when the tread takes a cap-base structure, all of the above tire materials may be provided with a base tread rubber layer as an outermost layer.

In these tire materials 4, at least one of base tread rubber layer, tread under-cushion rubber layer, belt cord coating rubber layer and coating rubber layer for cords in a belt protection member is made of a high electrically conductive rubber.

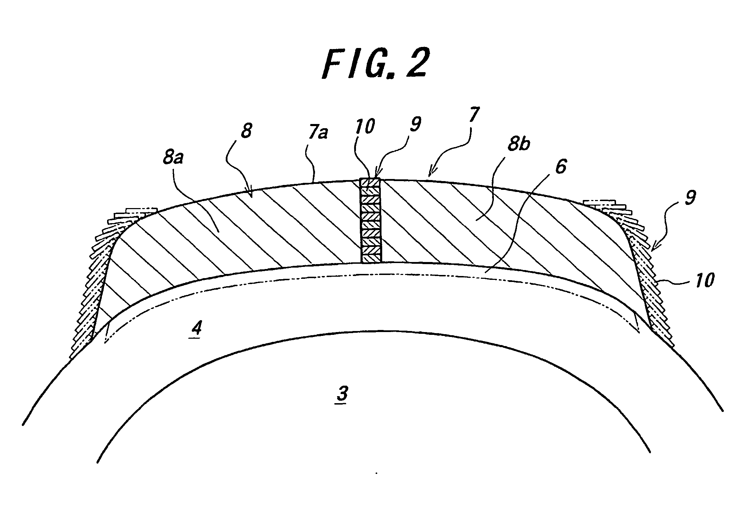

In FIG. 2 is shown an embodiment of forming the electrically conductive layer according to the invention, in which numeral 3 is one of the aforementioned rotating supports and numeral 4 one of the aforementioned tire materials. In the illustrated embodiment, the tire material 4 is provided with an uncured belt cord coating rubber layer 6 made of a high electrically conductive rubber as an outermost layer.

In this embodiment, a tread 7 is made of a low electrically conductive uncured tread rubber 8 as a whole in its thickness direction. The tread 7 is provided on a widthwise middle portion, a substantially central portion in the illustrated embodiment with an electrically conductive layer 9 ranging from the belt cord coating rubber layer 6 located at an inner circumferential side of the tread 7 to a ground contact face 7a of the tread 7.

In order to realize the above structure shown in FIG. 2, a high electrically conductive uncured rubber ribbon 10 extruded and shaped as shown in FIG. 1 and having preferably a volume resistivity at 25°C of not more than 106 Ω·cm is wound on a circumference of the tire material 4 at a given height in a radial direction under the rotation of the tire material 4 and hence the rotating support 3 before or after an uncured tread rubber 8 is wound on the circumference of the tire material 4, whereby the electrically conductive layer 9 is formed.

In the illustrated embodiment, the electrically conductive layer 9 is formed in substantially a normal direction of the tread 7 by helically winding and laminating the rubber ribbon 10 in the thickness direction. In this case, the windings of the rubber ribbon 10 contact with each other at their inside and outside over a full width of the ribbon, so that a large cross sectional area of the electrically conductive layer 9 can be ensured and hence a smooth discharge of static electricity passing through the electrically conductive layer 9 can be guaranteed.

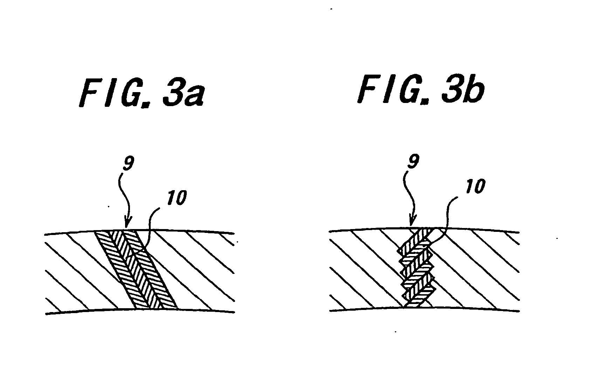

Also, the electrically conductive layer 9 may be formed by spirally and continuously winding a rubber ribbon 10 inclined as shown in the widthwise direction of the tread plural turns so as to contact the windings in left and right directions with each other over the full width of the ribbon as shown in FIG. 3a. Even in this case, the large cross sectional area and the improvement of the formation efficiency in the electrically conductive layer 9 can be established.

Furthermore, substantially the same effects as mentioned above can be attained even when the electrically conductive layer 9 is formed by winding and laminating the rubber ribbon 10 at a state of inclining the widthwise direction of the ribbon with respect to the normal direction of the tread 7 so as to contact the windings in a widthwise greater part with each other as shown in FIG. 3b. Moreover, the same effects as mentioned above can be attained when the electrically conductive layer 9 is formed by spirally winding a rubber ribbon 10 in the widthwise direction of the tread 7 plural turns so as to contact the windings with each other over substantially the full width of the rubber ribbon 10 (not shown).

When the low electrically conductive uncured tread rubber 8 is wound on the tire material so as to leave a space corresponding to a position for the formation of the above electrically conductive layer 9 as shown in FIG. 2, the subsequent formation of the electrically conductive layer 9 can be carried out by winding and laminating the rubber ribbon 10 in the space of the tread rubber 8 while using such a space as a guide.

On the other hand, after the formation of the electrically conductive layer 9, the tread rubber 8 can be wound so as to be arranged close to both side faces of the electrically conductive layer 9.

In any case, the electrically conductive layer 9 can be formed in the required given position with the required form and size. Also, the electrically conductive layer 9 can be closely united with the uncured tread rubber 8.

Alternatively, as shown in FIG. 2, a part of the uncured tread rubber 8, for example, portion 8a located at the left side of the electrically conductive layer 9 can be wound on the tire material before the formation of the electrically conductive layer 9, while the remaining portion 8b thereof can be wound on the tire material after the formation of the electrically conductive layer 9. According to this winding method, the formation of the electrically conductive layer 9 having structures as shown in FIGS. 3a and 3b becomes very easy.

As the structure of the tread 7 formed by winding the uncured tread rubber, there are a structure that the whole of the tread rubber 8 is formed by winding a low electrically conductive uncured rubber ribbon, e.g. a rubber ribbon having a rectangular form of about 5-30 mm in width and 0.2-7.0 mm in thickness on the tire material 4, and a structure that an integral extrusion shaped body of a low electrically conductive uncured rubber, e.g. an extrusion shaped body as a portion 8a of the tread rubber 8 and an extrusion shaped body as the remaining portion 8b are wound on the tire material 4 as shown in FIG. 2. In the former case, the degree of freedom in the design for the form and size of the tread rubber can be increased and the dimensional accuracy can be enhanced. In the latter case, the shaping efficiency of the tread can be improved.

Alternatively, the tread 7 is constructed on the tire material by winding the low electrically conductive uncured rubber ribbon as a portion 8a of the uncured tread rubber 8 and winding the integral extrusion shaped body of the low electrically conductive uncured rubber as the remaining portion 8b. In this case, the aforementioned merits can be simultaneously be established.

In addition to the forming embodiment of the electrically conductive layer 9, as shown by a phantom line in FIG. 2, the high electrically conductive uncured rubber ribbon 10 may be wound at a side face of the uncured tread rubber 8 within a required height ranging from the belt cord coating rubber layer 6 as an outermost layer of the tire material 4 to the ground contact face of the tread. In this case, the electrically conductive layer 9 can simply and rapidly be formed with a higher accuracy.

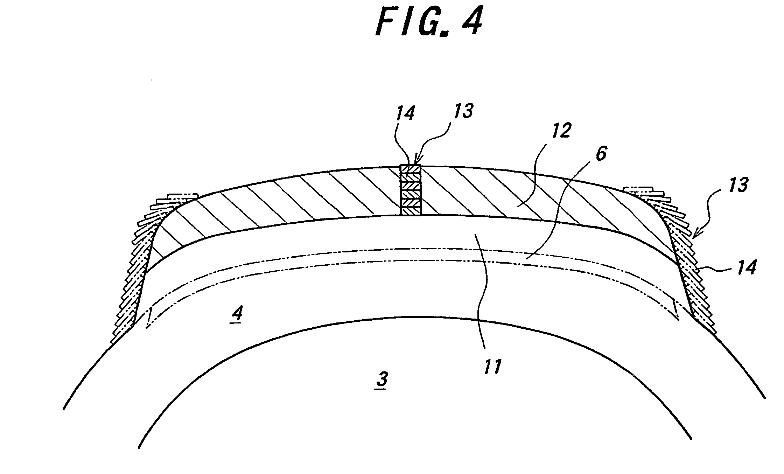

In FIG. 4 is sectionally shown a second embodiment of the tire according to the invention having a tread of a cap-base structure. In this case, an outermost layer of a tire material 4 is a high electrically conductive uncured base tread rubber layer 11 provided on its inner peripheral side with a belt cord coating rubber layer 6, while an uncured tread rubber made of a low electrically conductive rubber forms a cap tread rubber layer 12 located at an outer peripheral side of the base tread rubber layer 11, and an electrically conductive layer 13 extending from the base tread rubber layer 11 to a ground contact face of the tread is arranged in a widthwise central portion of the cap tread rubber layer 12. The electrically conductive layer 13 is formed by winding and laminating a high electrically conductive uncured rubber ribbon 14 in a thickness direction thereof likewise the case of FIG. 2.

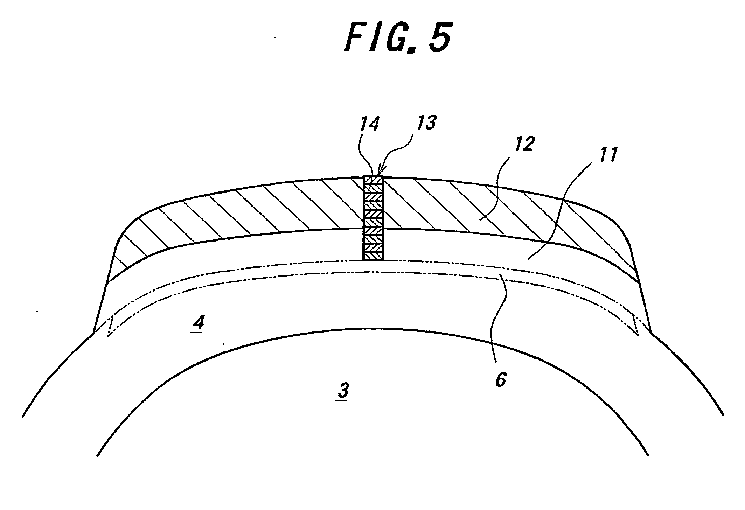

In FIG. 5 is sectionally shown a third embodiment of the tire according to the invention having a tread of a cap-base structure. In this case, the electrically conductive layer 13 is formed so as to extend from the surface of the belt cord coating rubber layer 6 through the base tread rubber layer 11 and the cap tread rubber layer 12 to the ground contact face of the tread in the radial direction.

Even in the treads having the above structures, as shown by a phantom line in FIG. 4, the electrically conductive layer 13 may be formed by winding the high electrically conductive uncured rubber ribbon 14 from a side face of the base tread rubber layer 11 through a side face of the cap tread rubber layer 12 to an outer surface of the cap tread rubber layer 12. In this case, the electrically conductive layer 13 may be extended to a position corresponding to the surface of the tire material 4.

In these embodiments of FIGS. 4 and 5, the electrically conductive layer 13 may be formed in various forms as shown in FIGS. 3a and 3b with respect to the first embodiment. Also, each of the base tread rubber layer 11 and the cap tread rubber layer 12 may be formed by winding the uncured tread rubber 8 as previously mentioned. In the latter case, at least one of the base tread rubber layer made of the high electrically conductive rubber and the cap tread rubber layer made of the low electrically conductive rubber may be formed by winding one or more kinds of uncured rubber ribbons or one or more kinds of uncured rubber extrusion shaped bodies.

As mentioned above, according to the invention, the electrically conductive layer having a form and a size as expected can simply and rapidly be formed by winding a high electrically conductive uncured rubber ribbon, so that a special design of an extruding head and a change of an internal shape in the extruding head for the formation of the required electrically conductive layer are unnecessary for integrally forming the electrically conductive layer having a desired form with the tread rubber, and also a fear of generating adhesion between cut faces when the uncured tread rubber is cut and the electrically conductive layer is formed between the cut faces and when the electrically conductive layer is formed between the cured tread rubbers and a fear of generating a breakage of one tread at the cut face can be removed.

## Claims

1. A method of producing a tread (7) for a tire provided with an electrically conductive layer (9;13) arranged in at least one of a widthwise middle portion and side faces of a tread rubber (8) made from a low electrically conductive rubber extending from a high electrically conductive rubber layer located at an inner peripheral side of the tread rubber to a ground contact face (7a) of the tread, which method comprises the steps of:
winding and laminating an uncured high electrically conductive rubber ribbon (10;14) for the formation of the electrically conductive layer (9;13) on a circumference of a tire material (4) containing a high electrically conductive rubber layer in a thickness direction as at least an outermost layer at a given height in a radial direction under the rotation of the tire material by contacting the windings with each other over substantially the full width of the rubber ribbon,
and winding an uncured tread rubber (8) on the circumference of the tire material before or after the winding of the rubber ribbon (10;14).

2. A method as claimed in claim 1, **characterized in that** a portion (8a) of the uncured tread rubber is wound on the circumference of the tire material (4) before the winding of the high electrically conductive uncured rubber ribbon (10;14) and the remaining portion (8b) thereof is wound after the winding of said ribbon.

3. A method as claimed in claim 1, **characterized in that** the whole of the uncured tread rubber (8) is constructed by winding a low electrically conductive uncured rubber ribbon on the circumference of the tire material (4).

4. A method as claimed in claim 1, **characterized in that** the whole of the uncured tread rubber (8) is constructed by winding an integral extrusion shaped body of a low electrically conductive uncured rubber on the circumference of the tire material (4).

5. A method as claimed in claim 1, **characterized in that** a portion of the uncured tread rubber is constructed by winding a low electrically conductive uncured rubber ribbon on the circumference of the tire material (4) and the remaining portion thereof is constructed by winding an integral extrusion shaped body of a low electrically conductive uncured rubber on the circumference of the tire material.

6. A method as claimed in any of claims 1 to 5, **characterized in that** the high electrically conductive uncured rubber ribbon (10;14) forming the electrically conductive layer (9;13) is wound at a side face of the uncured tread rubber (8) within a given height from the outermost layer of the tire material in the radial direction.

7. A method as claimed in any of claims 1 to 6, **characterized in that** the outermost layer of the tire material is a tread under-cushion rubber layer or a belt cord coating rubber layer (6).

8. A method as claimed in any of claims 1 to 6, **characterized in that** the outermost layer of the tire material is a base tread rubber layer (11) and the uncured tread rubber forms a cap tread rubber layer (12) and a layer located at an inner circumferential side of the outermost layer is a tread under-cushion rubber layer or a belt cord coating rubber layer (6) or a cord coating rubber layer for a belt protection member made of a high electrically conductive rubber.

9. A method as claimed in claim 8, **characterized in that** the high electrically conductive uncured rubber ribbon (14) forming the electrically conductive layer (13) is wound from the tread under-cushion rubber layer or the belt cord coating rubber layer (6) or the cord coating rubber layer for the belt protection member made of the high electrically conductive rubber in a height arriving at a surface of the cap tread rubber layer in the radial direction.

10. A method as claimed in claim 8 or 9, **characterized in that** the high electrically conductive uncured rubber ribbon (14) forming the electrically conductive layer (13) is wound at side faces of the base tread rubber layer (11) and the cap tread rubber layer (12) in a given height in the radial direction.

11. A method as claimed in any of claims 8 to 10, **characterized in that** at least one of the base tread rubber layer (11) made of a high electrically conductive rubber and the cap tread rubber layer (12) made of a low electrically conductive rubber is constructed by winding one or more kinds of uncured rubber ribbons or one or more kinds of uncured rubber extrusion shaped bodies on the tire material.

## Patentansprüche

1. Verfahren zur Herstellung einer Lauffläche (7) für einen Reifen, die mit einer elektrisch leitenden Schicht (9; 13) versehen ist, die in mindestens einem der Bereiche Mittelabschnitt in Breitenrichtung und Seitenflächen eines Laufflächengummis (8) angeordnet ist, das aus einem Gummi mit niedriger elektrischer Leitfähigkeit besteht, das sich von einer Gummischicht mit hoher elektrischer Leitfähigkeit an der Umfangsinnenseite des Laufflächengummis bis zu einer Bodenkontaktfläche (7a) der Lauffläche erstreckt, wobei das Verfahren die folgenden Schritte aufweist:
Wickeln und Auflaminieren eines unvulkanisierten Kautschukbands (10; 14) mit hoher elektrischer Leitfähigkeit zur Bildung der elektrisch leitenden Schicht (9; 13) auf dem Umfang eines Reifenmaterials (4), das in einer gegebenen Höhe in radialer Richtung eine Gummischicht mit hoher elektrischer Leitfähigkeit als mindestens eine äußerste Schicht in Dickenrichtung enthält, unter Drehung des Reifenmaterials, indem die Wicklungen im wesentlichen über die volle Breite des Gummibands miteinander in Kontakt gebracht werden,
und Aufwickeln eines unvulkanisierten Laufflächenkautschuks (8) auf den Umfang des Reifenmaterials nach dem Aufwickeln des Kautschukbands (10; 14).

2. Verfahren nach Anspruch 1, **dadurch gekennzeichnet, daß** ein Abschnitt (8a) des unvulkanisierten Laufflächenkautschuks auf den Umfang des Reifenmaterials (4) aufgewickelt wird, bevor das unvulkanisierte Kautschukband (10; 14) mit hoher elektrischer Leitfähigkeit und nach dem Aufwickeln des Bands der übrige Laufflächenabschnitt (8b) aufgewickelt werden.

3. Verfahren nach Anspruch 1, **dadurch gekennzeichnet, daß** der gesamte unvulkanisierte Laufflächenkautschuk (8) durch Aufwickeln eines unvulkanisierten Kautschukbands mit niedriger elektrischer Leitfähigkeit auf den Umfangs des Reifenmaterials (4) aufgebaut wird.

4. Verfahren nach Anspruch 1, **dadurch gekennzeichnet, daß** der gesamte unvulkanisierte Laufflächenkautschuk (8) durch Aufwickeln eines einstückigen Extrusionsformkörpers aus einem unvulkanisierten Kautschuk mit niedriger elektrischer Leitfähigkeit auf den Umfang des Reifenmaterials (4) aufgebaut wird.

5. Verfahren nach Anspruch 1, **dadurch gekennzeichnet, daß** ein Teil des unvulkanisierten Laufflächenkautschuks durch Aufwickeln eines unvulkanisierten Kautschukbands mit niedriger elektrischer Leitfähigkeit auf den Umfang des Reifenmaterials (4) aufgebaut wird und der übrige Teil durch Aufwickeln eines einstückigen Extrusionsformkörpers aus einem unvulkanisierten Kautschuk mit niedriger elektrischer Leitfähigkeit auf den Umfang des Reifenmaterials aufgebaut wird.

6. Verfahren nach einem der Ansprüche 1 bis 5, **dadurch gekennzeichnet, daß** das unvulkanisierte Kautschukband (10; 14) mit niedriger elektrischer Leitfähigkeit, das die elektrisch leitende Schicht (9; 13) bildet, an einer Seitenfläche des unvulkanisierten Laufflächenkautschuks (8) innerhalb einer gegebenen Höhe von der äußersten Schicht des Reifenmaterials in radialer Richtung aufgewickelt wird.

7. Verfahren nach einem der Ansprüche 1 bis 6, **dadurch gekennzeichnet, daß** die äußerste Schicht des Reifenmaterials eine Laufflächenunterpolsterungsgummischicht oder eine Gürtelkordbeschichtungsgummischicht (6) ist.

8. Verfahren nach einem der Ansprüche 1 bis 6, **dadurch gekennzeichnet, daß** äußerste Schicht des Reifenmaterials eine Grundlaufflächegummischicht (11) ist und der unvulkanisierte Laufflächenkautschuk eine Decklaufflächegummischicht (12) bildet, und daß eine Schicht an einer Umfangsinnenseite der äußersten Schicht eine Laufflächenunterpolsterungsgummischicht oder eine Gürtelkordbeschichtungsgummischicht (6) oder eine Kordbeschichtungsgummischicht für ein Gürtelschutzelement aus einem Gummi mit hoher elektrischer Leitfähigkeit ist.

9. Verfahren nach Anspruch 8, **dadurch gekennzeichnet, daß** das unvulkanisierte Kautschukband (14) mit hoher elektrischer Leitfähigkeit, das die elektrisch leitende Schicht (13) bildet, von der Laufflächenunterpolsterungsgummischicht oder der Gürtelkordbeschichtungsgummischicht (6) oder der Kordbeschichtungsgummischicht für das Gürtelschutzelement aus dem Gummi mit hoher elektrischer Leitfähigkeit aus in einer Höhe aufgewickelt wird, die in radialer Richtung eine Oberfläche der Decklaufflächegummischicht erreicht.

10. Verfahren nach Anspruch 8 oder 9, **dadurch gekennzeichnet, daß** das unvulkanisierte Kautschukband (14) mit hoher elektrischer Leitfähigkeit, das die elektrisch leitende Schicht (13) bildet, an Seitenflächen der Grundlaufflächegummischicht (11) und der Decklaufflächegummischicht (12) in einer gegebenen Höhe in radialer Richtung aufgewickelt wird.

11. Verfahren nach einem der Ansprüche 8 bis 10, **dadurch gekennzeichnet, daß** mindestens eine von der Grundlaufflächegummischicht (11) aus einem Gummi mit hoher elektrischer Leitfähigkeit und der Decklaufflächegummischicht (12) aus einem Gummi mit niedriger elektrischer Leitfähigkeit durch Aufwickeln einer oder mehrerer Arten von unvulkanisierten Kautschukbändern oder einer oder mehrerer Arten von unvulkanisierten Kautschukextrusionsformkörpern auf das Reifenmaterial aufgebaut wird.

## Revendications

1. Procédé de production d'une bande de roulement (7) pour un pneumatique pourvu d'une couche électriquement conductrice (9; 13) agencée dans au moins une partie parmi la partie du milieu dans le sens de la largeur et les faces latérales du caoutchouc de bande roulement (8) constituée d'un caoutchouc faiblement conducteur électriquement s'étendant à partir d'une couche de caoutchouc fortement conducteur électriquement située du côté périphérique intérieur du caoutchouc de bande de roulement jusqu'à une face de contact au sol (7a) de la bande de roulement, lequel procédé comprend les étapes consistant à:
enrouler et stratifier un ruban de caoutchouc fortement conducteur électriquement non vulcanisé (10; 14) pour la formation de la couche électriquement conductrice (9; 13) sur la circonférence du matériau de pneu (4) contenant une couche de caoutchouc fortement conducteur électriquement dans la direction de l'épaisseur sous la forme au moins d'une couche la plus extérieure à une hauteur donnée dans la direction radiale sous la rotation du matériau de pneu en mettant en contact les enroulements les uns avec les autres sur essentiellement toute la largeur du ruban de caoutchouc,
et en enroulant un caoutchouc de bande de roulement non vulcanisé (8) sur la circonférence du matériau de pneu avant ou après l'enroulement du ruban de caoutchouc (10; 14).

2. Procédé comme revendiqué dans la revendication 1, **caractérisé en ce qu'**une partie (8a) du caoutchouc de bande de roulement non vulcanisé est enroulée sur la circonférence du matériau de pneu (4) avant l'enroulement du ruban de caoutchouc non vulcanisé fortement conducteur électriquement (10; 14) et la partie restante (8b) de celui-ci est enroulée après l'enroulement dudit ruban.

3. Procédé comme revendiqué dans la revendication 1, **caractérisé en ce que** la totalité du caoutchouc de bande de roulement non vulcanisé (8) est confectionné en enroulant un ruban de caoutchouc non vulcanisé faiblement conducteur électriquement sur la circonférence du matériau de pneu (4).

4. Procédé comme revendiqué dans la revendication 1, **caractérisé en ce que** la totalité du caoutchouc de bande de roulement non vulcanisé (8) est confectionné en enroulant un corps formé par extrusion solidaire d'un caoutchouc non vulcanisé faiblement conducteur électriquement sur la circonférence du matériau de pneu (4).

5. Procédé comme revendiqué dans la revendication 1, **caractérisé en ce qu'**une partie du caoutchouc de bande de roulement non vulcanisé est confectionnée en enroulant un ruban de caoutchouc non vulcanisé faiblement conducteur électriquement sur la circonférence du matériau de pneu (4) et la partie restante de celui-ci est confectionnée en enroulant un corps formé par extrusion solidaire d'un caoutchouc non vulcanisé faiblement conducteur électriquement sur la circonférence du matériau de pneu.

6. Procédé comme revendiqué dans une quelconque des revendications 1 à 5, **caractérisé en ce que** le ruban de caoutchouc non vulcanisé fortement conducteur électriquement (10; 14) formant la couche électriquement conductrice (9; 13) est enroulé sur une face latérale du caoutchouc de bande de roulement non vulcanisé (8) dans une plage de hauteur donnée à partir de la couche la plus extérieure du matériau de pneu dans la direction radiale.

7. Procédé comme revendiqué dans une quelconque des revendications 1 à 6, **caractérisé en ce que** la couche la plus extérieure du matériau de pneu est une sous-couche de caoutchouc d'amortissement de bande de roulement ou une couche de caoutchouc de revêtement de corde de ceinture (6).

8. Procédé comme revendiqué dans une quelconque des revendications 1 à 6, **caractérisé en ce que** la couche la plus extérieure du matériau de pneu est une couche de caoutchouc de bande de roulement de base (11) et le caoutchouc de bande de roulement non vulcanisé forme une couche de caoutchouc de bande de roulement de sommet (12) et la couche située du côté circonférentiel intérieur de la couche la plus extérieure est une sous-couche de caoutchouc d'amortissement de bande de roulement ou une couche de caoutchouc de revêtement de corde de ceinture (6) ou une couche de caoutchouc de revêtement de corde pour un élément de protection de ceinture constitué d'un caoutchouc fortement conducteur électriquement.

9. Procédé comme revendiqué dans la revendication 8, **caractérisé en ce que** le ruban de caoutchouc non vulcanisé fortement conducteur électriquement (14) formant la couche électriquement conductrice (13) est enroulé à partir de la sous-couche de caoutchouc d'amortissement de bande de roulement ou de la couche de caoutchouc de revêtement de corde de ceinture (6) ou de la couche de caoutchouc de revêtement de corde pour l'élément de protection de ceinture constitué du caoutchouc fortement conducteur électriquement sur une hauteur arrivant à la surface de la couche de caoutchouc de bande de roulement de sommet dans la direction radiale.

10. Procédé comme revendiqué dans la revendication 8 ou 9, **caractérisé en ce que** le ruban de caoutchouc non vulcanisé fortement conducteur électriquement (14) formant la couche électriquement conductrice (13) est enroulé sur les faces latérales de la couche de caoutchouc de bande de roulement de base (11) et la couche de caoutchouc de bande de roulement de sommet (12) sur une hauteur donnée dans la direction radiale.

11. Procédé comme revendiqué dans une quelconque des revendications 8 à 10, **caractérisé en ce qu'**au moins une couche parmi la couche de caoutchouc de bande de roulement de base (11) constituée d'un caoutchouc fortement conducteur électriquement et la couche de caoutchouc de bande de roulement de sommet (12) constituée d'un caoutchouc faiblement conducteur électriquement est confectionnée en enroulant un ou plusieurs types de rubans de caoutchouc non vulcanisés ou un ou plusieurs types de corps formés par extrusion de caoutchouc non vulcanisé sur le matériau de pneu.
